# EUROPEAN PATENT APPLICATION

(11) **EP 1 489 815 A2**
(43) Date of publication of application: **22.12.2004**
(21) Application number: 04253636.7
(22) Date of filing: 17.06.2004
(51) Int. Cl.: H04L 29/06, G06F 17/60

(54) **Use of mobile communication terminal unit for allowing access to sport events and to information related to the events**

(30) Priority: 17.06.2003 JP 2003172557
(71) Applicant: NEC Corporation, Minato-ku, Tokyo 108-8001 (JP)
(72) Inventor: Ikejiri, Akihiro. c/o Nec Corporation, Tokoy 108-8001 (JP)
(74) Representative: Abnett, Richard Charles

(57) **Abstract**

A spectator accesses an enjoyment data providing server (2) providing enjoyment data by using a communication terminal unit (1), and transmits match watching allowing data for obtaining enjoyment data to a mobile communication terminal unit (3) carried by the spectator. On the basis of the match watching allowing data received f romthe enjoyment data providing server (2), an entrance allowing process for allowing entrance in enjoyment facility is executed between the mobile communication terminal unit (3) and the entrance allowing unit (4) installed in the enjoyment facility, via short-distance radio. Also, on the basis of the match watching allowing data received by the mobile communication terminal unit (3), the spectator can access the enjoyment data providing server (2), providing the enjoyment data for obtaining data concerning the enjoyment facility for a predetermined period of time.

## Description

### BACKGROUND OF THE INVENTION

The present invention relates to mobile communication terminal units (devices), enjoyment data receiving systems and enjoyment data providing methods, which permit obtaining data services provided by sponsors of enjoyment facilities such as baseball grounds.

Heretofore, spectators desiring to watch baseball or soccer matches, could directly watch the matches by buying tickets. Up to date, however, spectators desiring to get data of players and teams while watching matches, used to obtain the data in such manner as buying pamphlets. Also, on the match sponsor side, it was difficult to provide services with additional values other than the match watching to spectators who bought the tickets. This is so because no system for providing services before and after the match to the spectators who bought the tickets before and after the match was present, and the sponsor side could provide no such service to the spectators who bought the tickets unless the spectators come to the spot of the match.

In technical literature applied prior to the present invention, a service provision method is disclosed, in which various services are provided independently to individual spectators. More specifically, a peculiar URL address is set in one-to-one correspondence to an enjoyment facility entrance ticket possessed by each spectator, and the spectator accesses, by using a portable terminal, a server computer WWW site of the URL address corresponding to the entrance ticket so that the server computer distributes service contents via the accessed WWW site to the portable terminal (see Literature 1: Japanese Laid-Open Patent Application 2003-6517, for instance).

In the service provision method disclosed in Literature 1, however, the provision of various services to portable terminals possessed by individual spectators is made within the enjoyment facilities, and it is made possible by accessing the server computer by using the URL addresses shown in the entrance tickets, and this means that each spectator has to input the URL address to the portable terminal. Besides, the entrance tickets have to be carried when going to the enjoyment facilities, and may possibly be lost.

### SUMMARY OF THE INVENTION

The present invention was made in view of the above background, and it has an object of providing a mobile communication terminal device, an enjoyment data receiving system and an enjoyment data providing method, which permit spectators willing to utilize enjoyment facilities to readily obtain data services provided by sponsors of the enjoyment facilities.

According to an aspect of the present invention, there is provided a mobile communication terminal unit for obtaining utilization data necessary for its utilization from an enjoyment data providing server managing the utilization data, comprising: a utilization data transmitting means for transmitting the utilization data obtained from the enjoyment data providing server via short-distance radio to an entrance allowing unit for managing the utilization of the enjoyment facility; a connection data receiving means for receiving connection data for the connection to a data providing site provided by the enjoyment data providing server from the entrance allowing unit with the utilization data transmitted via the short-distance radio from the utilization data transmitting means; and a data site connecting means for connection to the data providing site provided by the enjoyment data providing server on the basis of the connection data received from the connection data receiving means.

The mobile communication terminal unit further comprises a route guide retrieving process obtaining means for obtaining, when the connection to the enjoyment data providing means has been made by the data site connecting means, a retrieval program for retrieving the route guide up to a predetermined position in the enjoyment facility from the data providing site on the basis of the utilization data obtained from the enjoyment data providing server; wherein: the movable communication terminal unit executes a retrieval program obtained by the route guide retrieving process obtaining means, and a route guide up to a predetermined position in the enjoyment facility is retrieved on the basis of the utilization data and displayed in a display of the mobile communication terminal unit.

The utilization data is obtained from the enjoyment data providing server by an obtaining request from an external communication terminal unit connected to the enjoyment data providing serer.

The movable communication terminal unit further comprises: a requesting means for obtaining the utilization data from the enjoyment data providing server; the requesting means serving to obtain the utilization data from the enjoyment data providing server.

According to another aspect of the present invention, there is provided an enjoyment data receiving system comprising an enjoyment data providing server for managing utilization data necessary for utilizing enjoyment facility, a movable communication terminal unit for obtaining the utilization data, and a communication terminal unit for executing a registration process for causing the mobile communication terminal unit to obtain the utilization data, and an entrance allowing unit for managing the utilization of the enjoyment facility, wherein: the communication terminal unit includes: a utilization data transmission requesting means for transmitting a transmission request for transmitting the utilization data to the mobile communication terminal unit to the enjoyment data providing server; the enjoyment data providing server includes: a utilization data transmitting means for transmitting the utilization data to the mobile communication terminal unit on the basis of a transmission request transmitted from the communication terminal unit; and a data providing site connecting means for connecting the movable communication terminal unit to a data managing site managed by the enjoyment data providing server by accessing from the mobile communication terminal unit with the utilization data transmitted thereto from the utilization data transmitting means; the mobile communication terminal unit includes: a utilization data receiving means for receiving the utilization data transmitted from the enjoyment data providing server; a utilization data transmitting means for transmitting the utilization data received from the utilization data receiving means via short-distance radio to the entrance allowing unit; and a connection data obtaining means for obtaining, from the entrance allowing unit with the utilization data transmitted thereto from the utilization data transmitting means, connection data or connection to the data providing site managed by the enjoyment data providing server; and the entrance allowing unit includes: a utilization data checking means for checking the justice of the utilization data transmitted via short-distance radio from the movable communication terminal unit; and a connection data providing means for providing, when the justice of the utilization data has been proved by the utilization data checking means, the connection data for connection to the data providing site managed by the enjoyment data providing server.

The communication terminal unit includes: a settling means for executing a fee payment process necessary when transmitting the utilization data to the mobile communication terminal unit; and a payment completion reporting means for transmitting, to the enjoyment data providing server, a report that the fee payment process in the settling means has been completed; and the utilization data transmitting means: transmits the utilization data to the mobile communication terminal unit when the fee payment process completion report has been transmitted from the communication terminal unit.

The utilization data checking means checks the justice of the utilization data by checking whether the utilization data managed by the entrance allowing unit and the utilization data transmitted via short-distance radio from the mobile communication terminal unit are identical and, when it has been determined that the two utilization data are identical, the justice of the utilization data is proved.

The utilization data managed by the entrance allowing unit is the utilization data transmitted from the enjoyment data providing server.

The mobile communication terminal unit further includes: a route guide retrieving process obtaining means for obtaining, when connection to the enjoyment data providing site has been made on the basis of the connection data obtained from the connection data obtaining means, a retrieving program for retrieving the route guide up to a predetermined position in the enjoyment facility from the data providing site on the basis of the utilization data obtained from the enjoyment data providing server; the retrieving program obtained by the route guide retrieving process obtaining means being executed in the mobile communication terminal unit, the route guide up to a predetermined position in the enjoyment facility being retrieved for, the retrieved route guide being displayed on a display of the mobile communication terminal unit.

According to other aspect of the present invention, there is provided an enjoyment data receiving system comprising an enjoyment data providing server for managing utilization data necessary for utilizing enjoyment facility, a mobile communication terminal unit for obtaining the utilization data, and an entrance allowing unit for managing the utilization of the enjoyment facility, wherein: the mobile communication terminal unit includes: a utilization data obtaining requesting means for transmitting an obtaining request for obtaining the utilization data to the enjoyment data providing server; a utilization data transmitting means for transmitting the utilization data obtained from the enjoyment data providing server with the obtaining request transmitted thereto from the utilization data obtaining requesting means via short-distance radio to the entrance allowing unit; and a connection data obtaining means for obtaining, from the entrance allowing unit with the utilization transmitted thereto from the utilization data transmitting means, connection data for connection to a data providing site managed by the enjoyment data providing server; the enjoyment data providing server includes: a utilization data transmitting means for transmitting the utilization data to the mobile communication terminal unit on the basis of a transmission request transmitted from the communication terminal unit; and a data providing site connecting means for connecting the movable communication terminal unit to a data managing site managed by the enjoyment data providing server by accessing from the mobile communication terminal unit with the utilization data transmitted thereto from the utilization data transmitting means; and the entrance allowing unit includes: a utilization data checking means for checking the justice of the utilization data transmitted via short-distance radio from the movable communication terminal unit; and a connection data providing means for providing, when the justice of the utilization data has been proved by the utilization data checking means, the connection data for connection to the data providing site managed by the enjoyment data providing server.

The mobile communication terminal unit further includes: a payment data reporting Means for transmitting, to the enj oyment data providing server, payment data for executing fee settlement necessary for the utilization data from the enjoyment data providing server; and the utilization data transmitting means transmits the utilization data to the mobile communication terminal unit when the fee settlement has been completed on the basis of the payment data transmitted from the mobile communication terminal unit.

The utilization data checking means checks the justice of the utilization data by checking whether the utilization data managed by the entrance allowing unit and the utilization data transmitted via short-distance radio from the mobile communication terminal unit are identical and, when it has been determined that the two utilization data are identical, the justice of the utilization data is proved.

The utilization data managed by the entrance allowing unit is the utilization data transmitted from the enjoyment data providing server.

The mobile communication terminal unit further includes: a route guide retrieving process obtaining means for obtaining, when connection to the enjoyment data providing site has been made on the basis of the connection data obtained from the connection data obtaining means, a retrieving program for retrieving the route guide up to a predetermined position in the enjoyment facility from the data providing site on the basis of the utilization data obtained from the enjoyment data providing server; the retrieving program obtained by the route guide retrieving process obtaining means being executed in the mobile communication terminal unit, the route guide up to a predetermined position in the enjoyment facility being retrieved for, the retrieved route guide being displayed on a display of the mobile communication terminal unit.

According to further aspect of the present invention, there is provided an enjoyment data providing method carried out with an enjoyment data providing server for managing utilization necessary for utilizing enjoyment facility, amobile communication terminal unit for obtaining the utilization data, a communication terminal unit for executing a registering process to let the mobile communication terminal unit obtain the utilization data and an entrance allowing unit for managing the utilization of the enjoyment facility, wherein: the communication terminal unit executes: a utilization data transmission requesting process of transmitting, to the enjoyment data providing server, a transmitting request for transmitting the utilization data to the mobile communication terminal unit; a utilization data transmitting process, in which the enjoyment data providing server having received the transmitting request in the utilization data transmitting requesting process transmits the utilization data to the mobile communication terminal unit on the basis of the received transmitting request; and a short-distance radio transmitting process, in which the mobile communication terminal unit having received the utilization data in the utilization data transmitting process transmits the utilization data via short-distance radio to the entrance allowing unit; and the entrance allowing unit executes: a connection data providing process of checking the justice of the utilization data transmitted from the mobile communication terminal unit in the short-distance radio transmitting process and, when the justice of the utilization data has been proved, providing connection data for connection to a data providing site managed by the enjoyment data providing server to the mobile communication terminal unit; and the mobile communication terminal unit executes: a data providing site connecting process of effecting connection to the data providing site managed by the enjoyment data providing server by using connection data provided in the connection data providing process.

The communication terminal unit executes: a fee payment process necessary when transmitting the utilization data to the mobile communication terminal unit and, when it completes the fee payment process, transmits to the enjoyment data providing server a report that the fee payment process has been completed; and in the utilization data transmitting process: when the report of the fee payment process completion has been made in the fee payment completion reporting process, the utilization data is transmitted to the mobile communication terminal unit.

The connection data providing process checks the justice of the utilization data by checking whether the utilization data managed by the entrance allowing unit and the utilization data transmitted via short-distance radio from the mobile communication terminal unit are identical and, when it has been determined that the two utilization data are identical, the justice of the utilization data is proved.

The utilization data managed by the entrance allowing unit is the utilization data transmitted from the enjoyment data providing server.

When the mobile communication terminal unit has been connected to the data providing site in the data site connecting process, a retrieving program for retrieving a route guide up to a predetermined position in the enjoyment facility is transmitted from the data providing site to the mobile communication terminal unit on the basis of the utilization data and executed in the mobile communication terminal unit, the route guide up to the predetermined position in the enjoyment facility is retrieved for on the basis of the utilization data, and the retrieved route guide is displayed on a display of the mobile communication terminal unit.

According to still further aspect of the present invention, there is provided an enjoyment data providing method carried out with an enjoyment data providing server for managing utilization necessary for utilizing enjoyment facility, amobile communication terminal unit for obtaining the utilization data, and an entrance allowing unit for managing the utilization of the enjoyment facility, wherein: the mobile communication terminal unit executes: a utilization data obtaining requesting process of transmitting, to the enj oyment data providing server, a obtaining request for transmitting the utilization data to the mobile communication terminal unit; a utilization data obtaining process, in which the enjoyment data providing server having received the obtaining request in the utilization data transmitting requesting process transmits the utilization data to the mobile communication terminal unit on the basis of the received obtaining request; and a short-distance radio transmitting process, in which the mobile communication terminal unit having received the utilization data in the utilization data transmitting process transmits the utilization data via short-distance radio to the entrance allowing unit; and the entrance allowing unit executes: a connection data providing process of checking the justice of the utilization data transmitted from the mobile communication terminal unit in the short-distance radio transmitting process and, when the justice of the utilization data has been proved, providing connection data for connection to a data providing site managed by the enjoyment data providing server to the mobile communication terminal unit; and the mobile communication terminal unit executes: a data providing site connecting process of effecting connection to the data providing site managed by the enjoyment data providing server by using connection data provided in the connection data providing process.

The mobile communication terminal unit executes: a fee payment data reporting process of transmitting, fee payment data for fee settling necessary when obtaining the utilization data from the enjoyment data providing server to the enjoyment data providing server; and in the utilization data reporting process: when the fee settling has been complete on the basis of the fee payment data transmitted in the payment data reporting process, the utilization data is transmitted to the mobile communication terminal unit.

The connection data providing process checks the justice of the utilization data by checking whether the utilization data managed by the entrance allowing unit and the utilization data transmitted via short-distance radio from the mobile communication terminal unit are identical and, when it has been determined that the two utilization data are identical, the justice of the utilization data is proved.

The utilization data managed by the entrance allowing unit is the utilization data transmitted from the enjoyment data providing server.

When the mobile communication terminal unit has been connected to the data providing site in the data site connecting process, a retrieving program for retrieving a route guide up to a predetermined position in the enjoyment facility is transmitted from the data providing site to the mobile communication terminal unit on the basis of the utilization data and executed in the mobile communication terminal unit, the route guide up to the predetermined position in the enjoyment facility is retrieved for on the basis of the utilization data, and the retrieved route guide is displayed on a display of the mobile communication terminal unit.

Other objects and features will be clarified from the following description with reference to attached drawings.

### BRIEF DESCRIPTION OF THE DRAWINGS

Fig. 1 shows an enjoyment data receiving system according to a first embodiment of the present invention;
Fig. 2 shows an internal structure of a mobile communication terminal unit in the enjoyment data receiving system;
Fig. 3 shows a sequence chart representing a first processing operation in the enjoyment data receiving system according to the first embodiment of the present invention;
Fig. 4 shows a sequence chart representing a second processing operation in the enjoyment data receiving system according to a first embodiment of the present invention;
Fig. 5 shows an enjoyment data receiving system according to a second embodiment of the present invention;
Fig. 6 shows a sequence chart representing a first processing operation in the enjoyment data receiving system according to the second embodiment of the present invention;
Fig. 7 shows a sequence chart representing a second processing operation in the enjoyment data receiving system according to the second embodiment of the present invention;
Fig. 8 shows a sequence chart representing a first processing operation in the enjoyment data receiving system according to a third embodiment of the present invention;
Fig. 9 shows a sequence chart representing a second processing operation in the enjoyment data receiving system according to the third embodiment of the present invention;
Fig. 10 shows a sequence chart representing a first processing operation in the enjoyment data receiving system according to a fourth embodiment of the present invention; and
Fig. 11 shows a sequence chart representing a second processing operation in the enjoyment data receiving system according to the fourth embodiment of the present invention;

### PREFERRED EMBODIMENTS OF THE INVENTION

Preferred embodiments of the present invention will now be described with reference to the drawings.

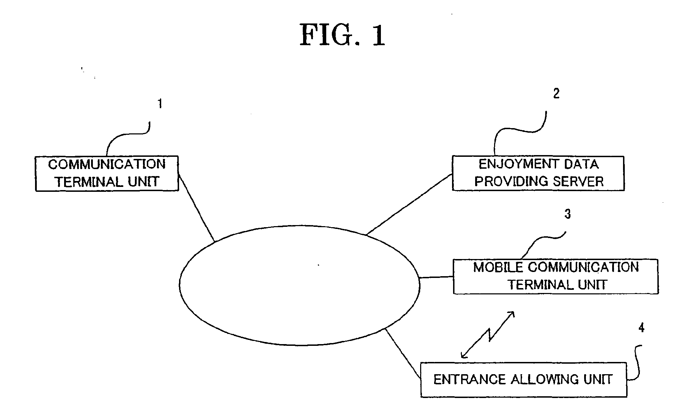

An enjoyment data receiving system embodying the present invention will now be described with reference to Figs. 1 to 3.

In the enjoyment data receiving system embodying the present invention, a spectator willing to receive enjoyment data accesses, by using a communication terminal unit 1, an enjoyment data providing server 2 on the sponsor side providing enjoyment data to let the enjoyment data providing server 2 transmit reception allowance data for receiving the enjoyment data to a mobile communication terminal unit 3 carried by the spectator. Then, on the basis of the reading allowance data received from the enjoyment data providing server 2, an entrance allowing process to allow the spectator to enter the enjoyment facility is executed in a short-distance radio process between the mobile communication terminal device 3 and an entrance allowing unit 4 installed at the entrance gate of the enjoyment facility for receiving the enjoyment data, whereby the spectator can receive the enjoyment data in the enjoyment facility.

Also, on the basis of the reading allowance data received in the mobile communication terminal unit 3 carried by him or her, the spectator can access the enjoyment data providing server 2 on the sponsor side providing enjoyment data for reading data concerning the enjoyment facility for only a predetermined period of time. The mobile communication terminal unit 3 may be used in lieu of the communication terminal unit 1 as well.

Embodiments of the enjoyment data receiving system according to the present invention will now be described with reference to the accompanying drawings.

A first embodiment of the enjoyment data receiving system will first be described with reference to Fig. 1.

The first embodiment of the enjoyment data receiving system comprises the communication terminal unit 1 installed in a convenience store or the like, the enjoyment data providing server 2 provided by the sponsor of the enjoyment facility, the mobile communication terminal unit 3 carried by the user who enjoys the enjoyment facility, and the entrance allowing unit 4 installed at the entrance gate of the enjoyment facility. The individual units constituting the instant enjoyment data receiving system will now be described.

The communication terminal unit 1 is installed in a convenience store or the like, and serves to access the enjoyment data providing server 2 and register match watching data therein, the match watching data being for transmitting utilization allowance data necessary for watching the match in the mobile communication terminal unit 3 carried by the user. The match watching data that is registered in the enjoyment data providing server 2, contains the mail address of the mobile communication terminal unit 3 carried by the user and user's personal data. When the communication terminal unit 1 registers the match watching data in the enjoyment data providing server 2, it can also execute a process of paying a fee necessary for the match watching by the user, and at the time of completion of the user' s payment process it transmits a payment process completion report to the enjoyment data providing server 2.

The enjoyment data providing server 2 is a unit having a function that when the communication terminal unit 1 registers the match watching data in the enjoyment data providing server 2, it transmits the use allowance data necessary for the match watching to the user's mobile communication terminal unit 3 with the match watching data registered therein. The use allowance data contains contents reception requiring data for receiving match data contents provided by the enjoyment data providing server 2 and ticket data necessary when the user enters the match sport. The ticket data contains data of the position of a seat or the like for matching the match in the match spot.

The match data contents provided by the enjoyment data providing server 2 contain data concerning the match watching (such as player's personal data, team data, data of guidance up to the match spot and district data around the match spot).

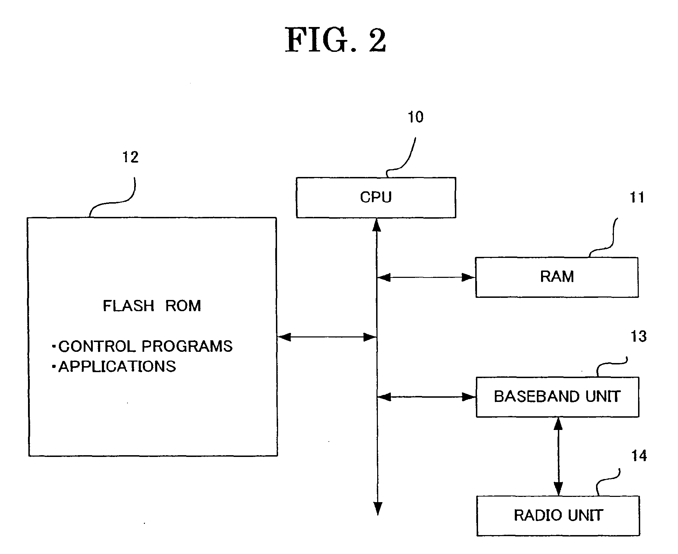

As shown in Fig. 2 the mobile communication terminal unit 3 includes a CPU 10 for controlling the mobile communication terminal unit, a RAM 11 serving as work area, a FLASH ROM 12, in which control programs and applications are registered, a baseband unit 13 for converting data signal to a signal to be sent out to a transfer line, and a radio unit 14 serving a mobile communication terminal. In this embodiment, the mobile communication terminal unit executes a communication process in short-distance radio communication (e.g., infrared communication) with an external communication device (i.e., the entrance allowing unit 4 in this embodiment).

The mobile communication terminal unit 3 having the above arrangement can receive the utilization allowance data necessary for the match watching from the enjoyment data providing server 2 and, on the basis of the contents reception requiring data contained in the received utilization allowing data, obtain data of the match data contents provided by the enjoyment data providing server 2.

The mobile communication terminal unit 3 also transmits the ticket data contained in the utilization allowing data received from the enjoyment data providing server 2 in short-distance radio communication (e.g., infrared communication) to the entrance allowing unit 4 installed at the entrance gate of the match spot to let the entrance allowing unit 4 check the justice of the ticket data.

The entrance allowing unit 4 is installed at the entrance gate of the match spot, and serves to execute a process of checking the justice of the ticket data received in short-distance radio from the mobile communication terminal unit 3. In this check process, the justice of the ticket data received in short-distance radio from the mobile communication terminal unit 3 is checked by checking whether this ticket data is identical with ticket data managed in the entrance allowing unit 4. The ticket data managed in the entrance allowing unit 4 is transmitted from the enjoyment data providing server 2. The ticket data is updated for every match, and ticket data is transmitted from the enjoyment data providing server 2 for every match. Also, on the day of the match, ticket data is appropriately transmitted from the enjoyment data providing server 2.

When the entrance allowing unit 4 certifies the justice of he ticket data transmitted from the mobile communication terminal unit 3, it transmits additional data in short-distance ratio to the mobile communication terminal unit 3. The additional data is constituted by updated ticket data produced by adding new data to the ticket data lest the entrance allowing unit 4 should allow re-entrance with the ticket data with the certified justice and also a password, which permits connection of the entrance allowing unit 4 to the data providing site provided by the enjoyment data providing server 2 when and only when the justice of the ticket data is certified. The updated ticket data is managed in the entrance allowing unit 4. It is possible to connect the entrance allowing unit 4 to the database to have data be managed therein.

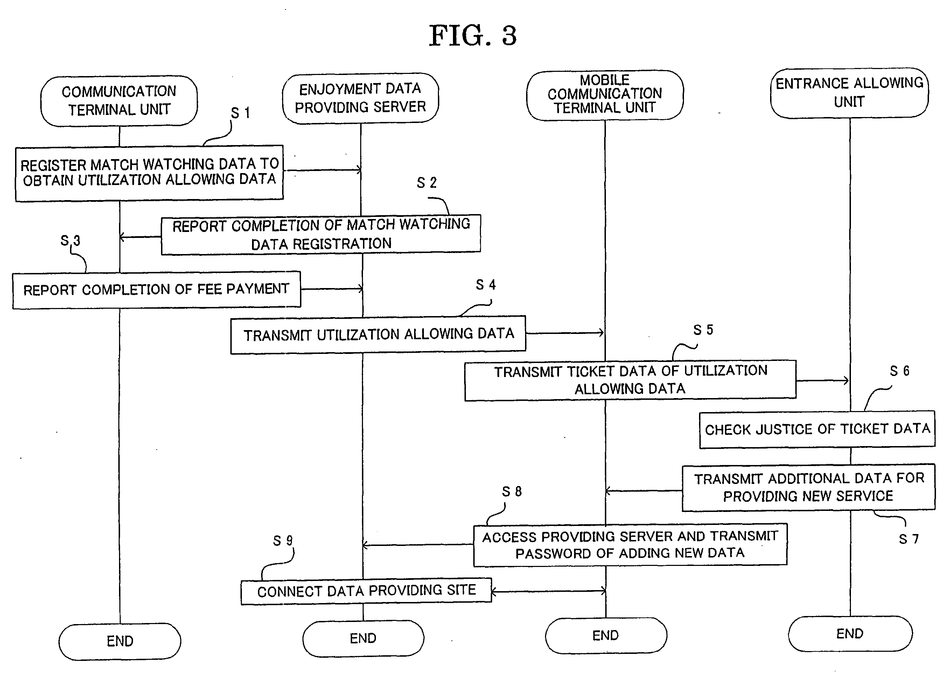

The process operation of the first embodiment of the enjoyment data receiving system will now be described with reference to Fig. 3.

First, the user as spectator accesses the enjoyment data providing server 2 by using the communication terminal unit 1 installed in a convenience store or the like, and selects match data for the user's watching from a list in the match data. At this time, the enjoyment data providing server 2 registers in it, by using the communication terminal unit 1, such match watching data as the mail address of the mobile communication terminal unit 3 carried by the user and the user' s personal data, that are necessary for the mobile communication terminal unit 3 to obtain utilization allowing data when the user watches the match (step S1). The enjoyment data providing server 2 transmits to the communication terminal unit 1 a report of completion of the registration of the match watching data transmitted from the communication terminal unit 1 in the enjoyment data providing server 2 (step 2).

The communication terminal unit 1 receives the report of completion of match watching data registration, and the user as spectator having received the match watching data registration completion report on the display of the communication terminal unit 1, causes the communication terminal unit 1 to execute a fee payment process necessary for the user's match watching. The fee payment process is executed by using a credit card, the cash, etc., but the method of the fee payment process is not limited in any way so long as the process is executed in the communication terminal unit 1.

When the fee payment process has been completed, the communication terminal unit 1 transmits the report of completion of the fee payment process to the enjoyment data providing server 2 (step S3). The payment of the fee necessary for the user's match watching may also be made by settling in a convenient store register. In this case, after the completion of the fee payment process, a fee payment process completion report is transmitted via the personal computer connected to the register to the enjoyment data providing server 2.

The enjoyment data providing server 2 having received the report of completion of the fee payment process in the above process, transmits the utilization allowing data necessary for the match watching to the mobile communication terminal unit 3 of the fee payment process completion user by using the mail address contained in the match watching data registered in it (step S4). The transmitted utilization allowing data contains contents obtaining request data for obtaining match data contents provided by the enjoyment data providing server 2 and ticket data necessary for the user to enter the match spot. The ticket data contains data of the position of the seat or the like in the match spot to be occupied by the user for the watching. The match data contents provided by the enjoyment data providing serer 2 contain data concerning the match watching (such as player' s personal data, team data, data of guide up to the match spot and data of the neighborhood of the match spot), and these data are obtained by the user through the mobile communication terminal unit 3.

Thus, the user as spectator can obtain, on the basis of the contents obtaining request data contained in the utilization allowing data transmitted to the mobile communication terminal unit 3, the data of the match data contents provided by the enjoyment data providing server 2, and he or she can obtain the data concerning the match watching shown in the match data contents before he or she watches the match.

When the user enters the match spot as spectator, he or she transmits the ticket data contained in the utilization allowing data, which has been transmitted from the enjoyment data providing server 2 to the mobile communication terminal unit 3, in short-distance radio from the mobile communication terminal unit 3 to the entrance allowing unit 4 installed at the entrance gate of the match spot (step S5). The entrance allowing unit 4 then executes a check process of checking the justice of the ticket data received in the short-distance radio from the mobile communication terminal unit 3 (step S6). In the check process, the justice of the ticket data is checked by checking whether the ticket data received in the short-distance radio from the mobile communication terminal unit 3 and the ticket data managed in the entrance allowing unit 4 are identical with each other. When it is determined in this check that the ticket data transmitted in the short-distance radio from the mobile communication terminal unit 3 and the ticket data managed in the entrance allowing unit 4 are identical with each other, the justice of the ticket data is certified, and the entrance allowing unit 4 allows the user carrying the mobile communication terminal unit 3 to enter the match spot.

The entrance allowing unit 4 manages the ticket data transmitted from the enjoyment data providing server 2 to the entrance allowing unit 4. The method of transmitting the ticket data from the enjoyment data providing server 2 to the entrance allowing unit 4 is not particularly limited, and it is also possible to automatically appropriately transmit the ticket data.

When the justice of the ticket data is certified in the check process of checking the ticket data executed in the short-distance radio between the mobile communication terminal unit 3 and the entrance allowing unit 4, the entrance allowing unit 4 transmits, in short-distance radio, additional data for providing new additional service to the mobile communication terminal unit 3 (step S7). In order to prohibit the entrance allowing unit 4 to allow re-entrance with the justice-certified ticket data, the additional data contains updated ticket data obtained by adding new data, and it also contains a password permitting connection of the entrance allowing unit 4 to the data providing site provided by the enjoyment data providing server 2 when and only when the justice of the ticket data is certified. The ticket data contained in the additional data transmitted to the mobile communication terminal unit 3 is managed in the entrance allowing unit 4.

Then the mobile communication terminal unit 3 accesses the enjoyment data providing server 2 (step 8), and connect itself to the data providing site, which can be utilized when and only when the ticket data check has been competed, by using the password contained in the additional data received from the entrance allowing unit 4 (step 9). When the entrance allowing unit 4 is connected to the data providing site provided by the enjoyment data providing server 2, on the basis of the position data contained in the ticket data held in the mobile communication terminal unit 3, a retrieval program for retrieving the route up to the spectator' s seat is installed from the data providing site in the mobile communication terminal unit 3, which executes the installed retrieval program. Thus, the route up to the spectator's seat is retrieved on the basis of the position data contained in the ticket data held in the mobile communication terminal unit 3, and is displayed on the display of the mobile communication terminal unit 3. On the basis of the displayed route, the spectator can follow the route up to the own seat. The retrieval program is data that is set to be installed in the mobile communication terminal unit 3 when and only when the data providing site and the mobile communication terminal unit 3 are first connected to each other, and not to be installed at the second and following times of connection.

The data providing site is common to only the spectators allowed to enter the match spot, and it is adapted such that a spectator can register image data taken in the match spot by using an imaging means mounted in the mobile communication terminal unit 3 and also that another spectator can read or obtain image data registered in that data providing site.

The utilization of the data providing site by the spectators in the match spot, has an effect that the spectators using the data providing site can read image data in the match spot as taken from the seats or positions of other spectators. Thus, it is possible that the spectators can have the visual points of all the spectators in the match spot and watch the figures or plays of players which can not be watched from their own positions.

The data providing site is provided for the spectators in the match spot for a predetermined period of time (for instance one week) after the match watching, as counted from the date of the match watching, and the spectator can access the site at any time from the mobile communication terminal unit 3 by using a password so long as the time is within the predetermined period of time. The spectators thus can enjoy, even after the match watching, the leisure time of the match by accessing the data providing site only for a predetermined period of time.

As shown above, in the first embodiment of the enjoyment data receiving system the spectator registers his or her match watching data necessary for the match watching in the enjoyment data providing server, which in turn, on the basis of the match watching data registered from the communication terminal unit, transmits utilization allowing data necessary for the match watching to the mobile communication terminal unit registered in the enjoyment data providing server and carried by the server. The mobile communication terminal unit transmits in short-distance radio the ticket data contained in the utilization allowing data received from the enjoyment data providing server to the entrance allowing unit installed in the match spot to let the entrance allowing unit to check the justice of the ticket data. At the time of checking the justice of the ticket data, the entrance allowing unit transmits additional data to the mobile communication terminal unit. The mobile communication terminal unit thus can connect itself to the data providing site provided to the sole spectators allowed to enter the match spot by using the password contained in the additional data received from the entrance allowing unit.

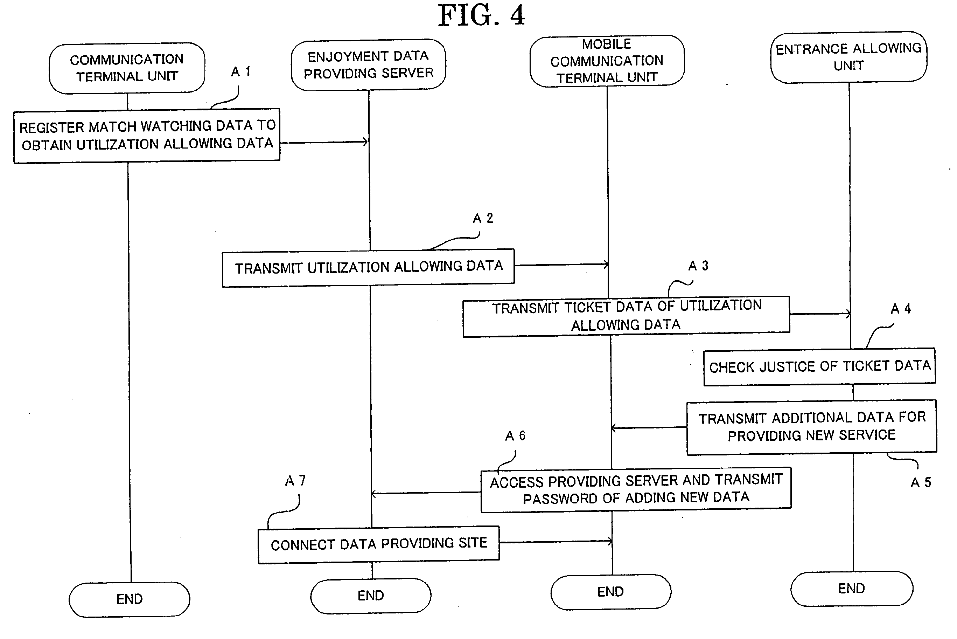

In the above first embodiment, the enjoyment data providing server has been described to transmit the utilization allowing data necessary for the match watching to the mobile communication terminal units of the users having completed the fee payment process. However, it is possible to arrange the fee payment process such as to be executed after the utilization allowing data transmission, or, as shown in Fig. 4, it is possible to arrange such that the utilization allowing data is automatically transmitted to the mobile communication terminal unit as the source of destination when the match watching data from the communication terminal unit is registered (step A2) .

A second embodiment will now be described.

In the first embodiment, the mobile communication terminal carried by a user obtained the utilization allowing data necessary for the match watching by accessing the enjoyment data providing server by using a communication terminal unit or the like installed in a convenience store or the like. In the second embodiment, the mobile communication terminal unit obtains the utilization allowing data necessary for the match watching by using the mobile communication terminal unit carried by the user instead of the installed communication terminal unit.

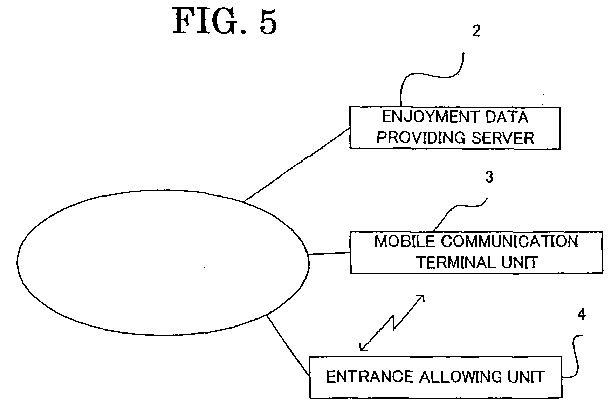

The second embodiment of the enjoyment data receiving system will now described with reference to Fig. 5.

The second embodiment of the enjoyment data receiving system comprises an enjoyment data providing server 2 provided by the enjoyment facility sponsor side, a mobile communication terminal unit 3 carried by the user utilizing the enjoyment facility, the entrance allowing unit 4 installed at the enj oyment facility entrance gate. In the second embodiment the mobile communication terminal unit 3 is additionally has the function of the communication terminal unit 1 in the first embodiment.

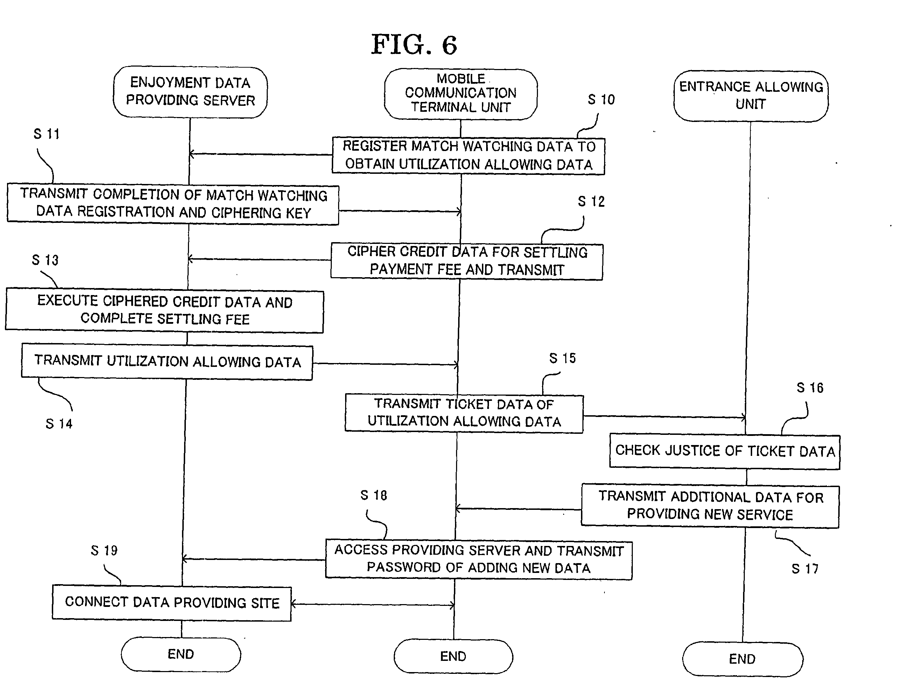

The process operation of the second embodiment of the enjoyment data receiving system will now be described with reference to Fig. 6.

First, the user as spectator accesses the enjoyment data providing server 2 by using the mobile communication terminal unit 3 carried by him or her, and registers match watching data necessary for obtaining utilization allowing data necessary for his or her match watching (such as user's personal data) in the enjoyment data providing server 2 (step S10). The enjoyment data providing server 2 transmits to the mobile communication terminal unit 3 a report that the registration of the match watching data has been completed. At this time, the enjoyment data providing server 2 simultaneously transmits to the mobile communication terminal unit 3 a ciphering key for ciphering credit data for settling the free necessary for the match watching (step S11).

Then, the mobile communication terminal unit 3 receives from the enjoyment data providing server 2 a report that the registration of the match watching data in the enjoyment data providing server 2, and the user confirms the completion of the registration of the received match watching data on the display of the mobile communication terminal unit 3. The user as the customer inputs the credit data for settling the fee necessary for the match watching to the mobile communication terminal unit 3. The mobile communication terminal unit 3 ciphers the inputted credit data by using the ciphering key received from the enjoyment data providing server 2, and transmits the ciphered credit data to the enjoyment data providing server 2 (step S12).

The enjoyment data providing server 2 receiving the ciphered credit data executes a deciphering process on the received credit data by using the deciphering key held in it. The enjoyment data providing server 2 then completes the settling of the fee necessary for the match watching on the basis of the credit data restored in the deciphering process (step S13). Then, the enjoyment data providing server 2 transmits the utilization allowing data necessary for the match watching to the mobile communication terminal unit 3 having completed the fee settlement (step S14). The transmitted utilization allowing data contains contents obtaining request data for obtaining match data contents provided by the enjoyment data providing server 2 and the ticket data necessary for the user to enter the match spot. The ticket data contains data of the position of the seat or the like for the user's match watching in the match spot. The match data contents provided by the enjoyment data providing server 2 include data concerning the match watching (such as player's personal data, team data, data of the guide up to the match spot and data around the match spot). The user can obtain the data by using the mobile communication terminal unit 3.

Subsequently, when the user as the spectator enters the match spot, the mobile communication terminal unit 3 transmits in short-distance radio the ticket data contained in the utilization allowing data transmitted from the enjoyment data providing server 2 to the mobile communication terminal unit 3 to the entrance allowing unit installed at the match spot entrance gate (step 15), and the entrance allowing unit 4 executes a process of checking the justice of the ticket data received via the short-distance radio from the mobile communication terminal unit 3 (step 16). When the entrance allowing unit 4 confirms the justice of the ticket data, it transmits additional data via the short-distance radio to the mobile communication terminal unit 3 (step S17).

As shown above, in the second embodiment of the enjoyment data receiving system, spectator's match watching data necessary for the match watching is registered in the enjoyment data providing server by using the movable communication terminal unit carried by the spectator carried by the spectator with the matching data thereof registered in the enjoyment data providing server, and the enjoyment data providing server transmits, on the basis of the match watching data registered form the mobile communication terminal unit, utilization allowing data are necessary for the match watching to the mobile communication terminal unit. The mobile communication terminal unit transmits the ticket data contained in the utilization allowing data received from the enjoyment data providing server via short-distance radio to the entrance allowing unit installed in the match spot to let the entrance allowing unit check the justice of the ticket data.

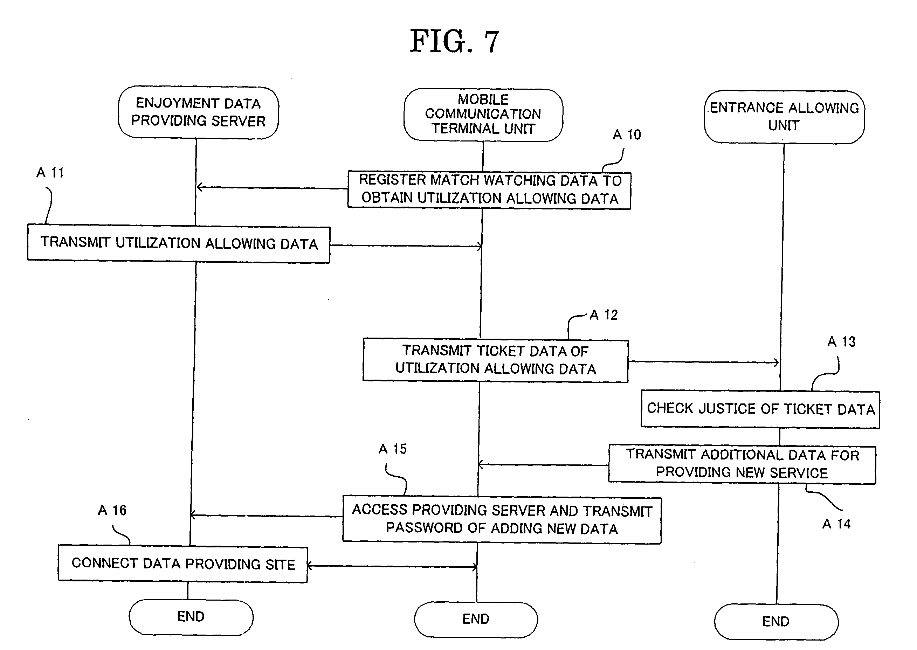

In the above second embodiment, the enjoyment data providing server transmits, after completion of the fee settlement necessary for the match watching on the basis of the credit data obtained by the deciphering process, the utilization allowing data necessary for the match watching to the movable communication terminal unit with the fee settlement completed therefor. However, it is possible to let the fee settlement process necessary for the match watching be made after transmission of the utilization allowing data. As a further alternative as shown in Fig. 7, the utilization allowing data may be transmitted to the mobile communication terminal unit at the time of completion of the registration of the match watching data from the mobile communication terminal unit (step A11).

A third embodiment will now be described.

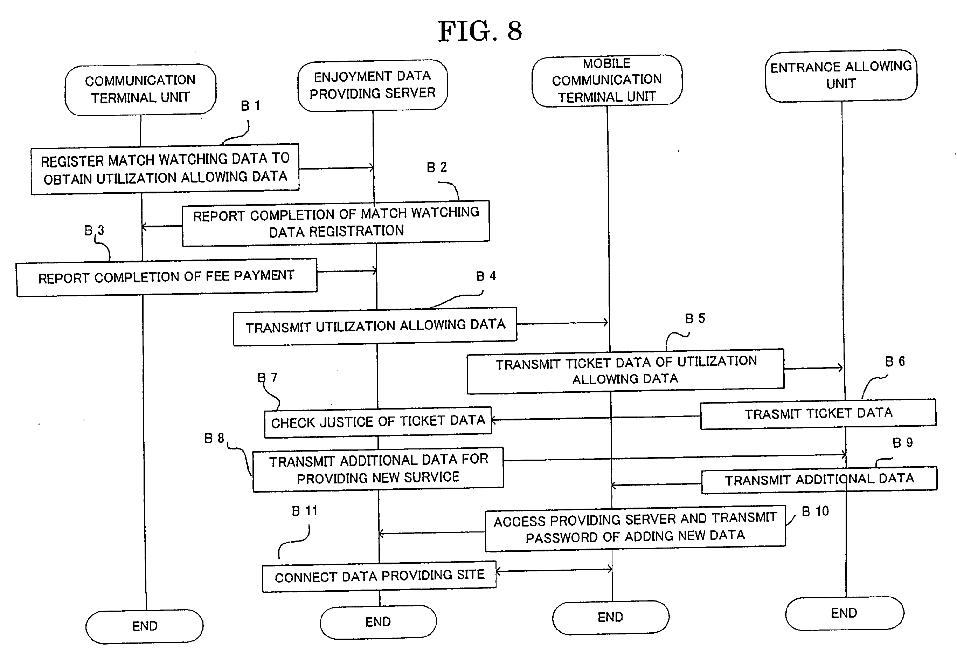

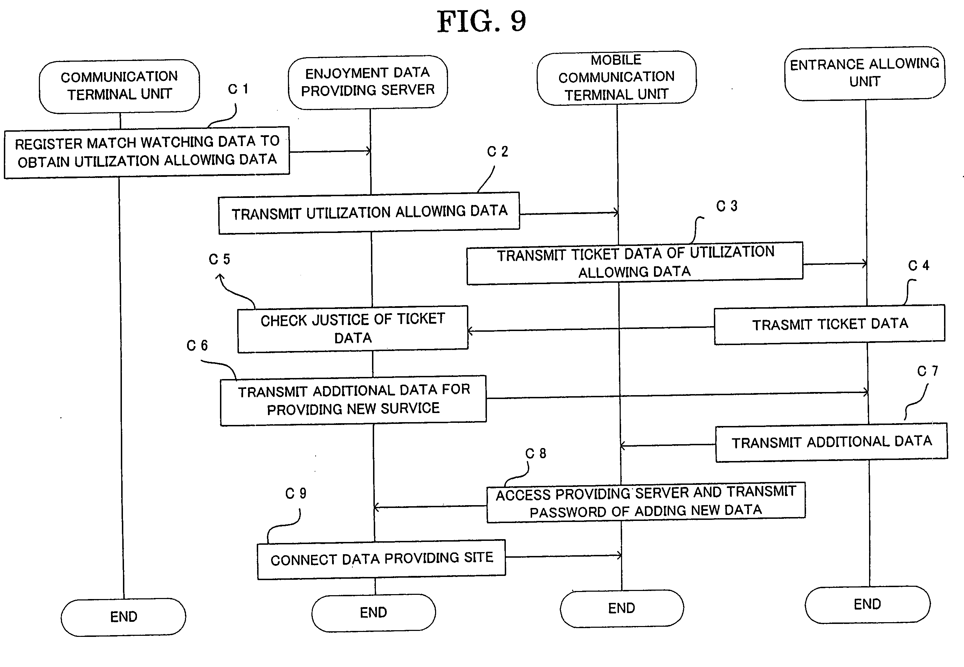

In the first embodiment, the entrance allowing unit 4 constituting the enjoyment data receiving system executed the justice check process on the ticket data received via short-distance radio from the mobile communication terminal unit 3. In the third embodiment, as shown in Fig. 8 and 9, in lieu of the entrance allowing unit 4 the enjoyment data providing server 2 manages the ticket data, the entrance allowing unit 4 transmits the ticket data received via short-distance radio from the mobile communication terminal unit 3, and the enjoyment data providing server 2 executes the justice check process on the ticket data. Thus, the enjoyment data providing server 2 precludes the management of the ticket data in the entrance allowing unit 4. Fig. 8 shows a process operation that, in the first embodiment, the enjoyment data providing server transmits the utilization allowing data necessary for the match watching to the mobile communication terminal unit after the fee payment process completion. Fig. 9 is a view showing a process operation in the case that when the match watching data from the communication terminal unit has been registered, the enjoyment data providing server automatically transmits the utilization allowing data necessary for the match watching to the mobile communication terminal unit as the source of the registered data.

A fourth embodiment will now be described.

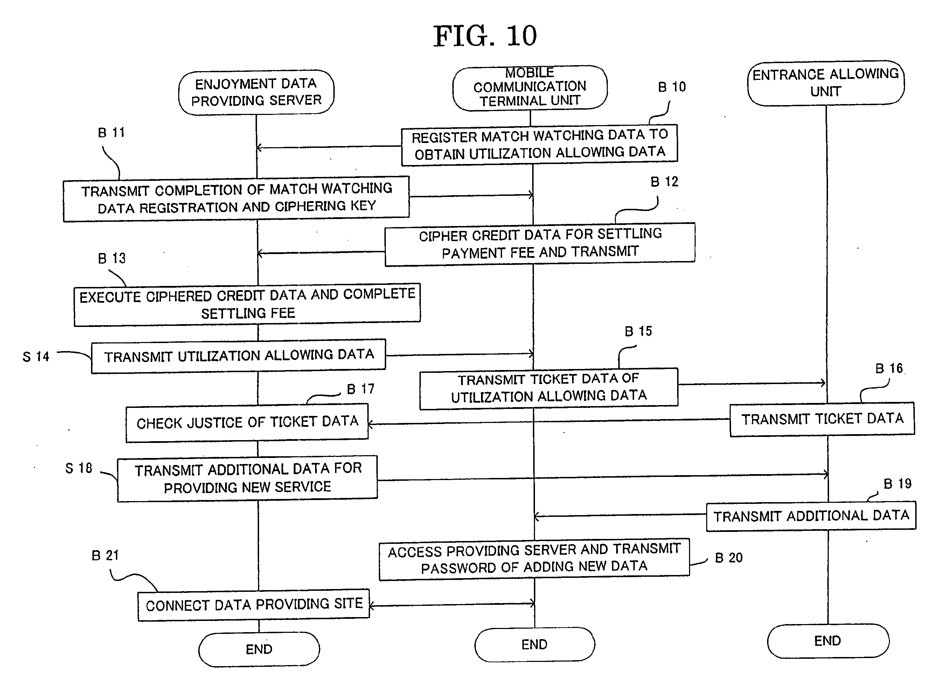

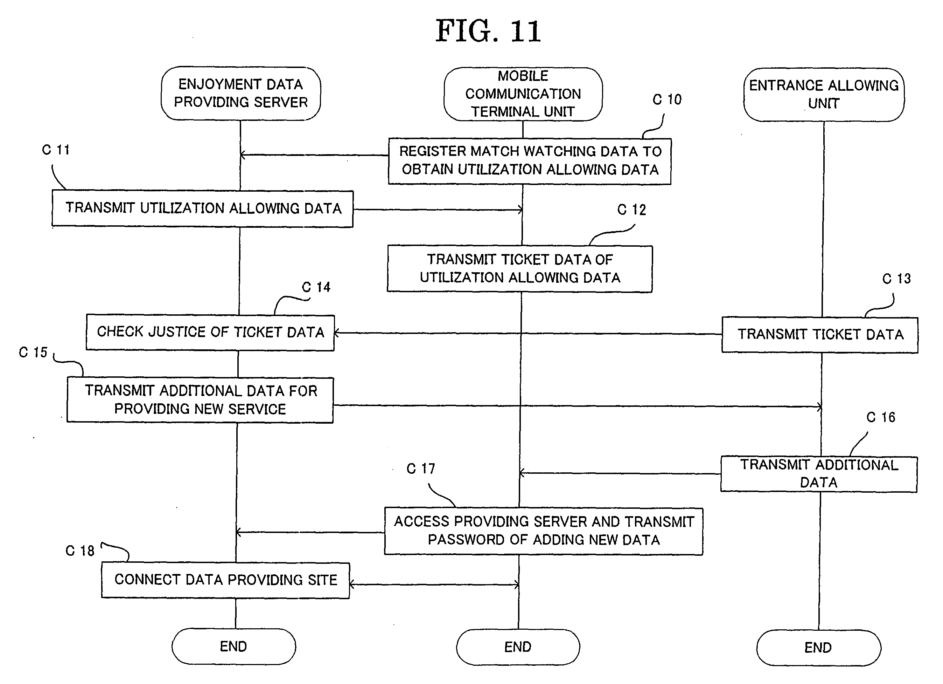

In the second embodiment, the entrance allowing unit 4 constituting the enjoyment data receiving system executes the justice check process on the ticket data received via the short-distance radio from the mobile communication terminal unit 3. In the fourth embodiment, as shown in Figs. 10 and 11, in lieu of the entrance allowing unit 4, the enjoyment data providing server 2 manages the ticket data, the entrance allowing unit 4 transmits the ticket data received via the short-distance radio from the mobile communication terminal unit 3 to the enjoyment data providing server 2, and the enjoyment data providing server 2 executes the justice check process on the ticket data. Thus, the enjoyment data providing server 2 precludes the management of the ticket data in the entrance allowing unit 4. Fig. 10 shows a process operation that, in the second embodiment, the enjoyment data providing server transmits the utilization allowing data necessary for the match watching to the mobile communication terminal unit of the user after completion of the fee payment process. Fig. 11 is a view showing a process operation in the case that, when the match watching data from the mobile communication terminal unit has been registered, the utilization allowing data is automatically transmitted to the mobile communication terminal unit as the source of the registered data.

The embodiments described above are preferred embodiments of the present invention, and various changes and modifications are possible without departing from the scope of the present invention. For example, in the above embodiments, it is possible that the ticket data contained in the utilization allowing data received by the mobile communication terminal unit 3 from the enjoyment data providing server 2 has an additional reading prevention key to prohibit transfer of the ticket data from the mobile communication terminal unit 3 carried by the user to the mobile communication terminal unit of a third party.

In this case, when the mobile communication terminal unit 3 receives the utilization allowing data transmitted from the enjoyment data providing server 2, the reading prevention key added to the ticket data contained in the received utilization allowing data becomes effective in the mobile communication terminal unit 3, thus disabling the release of the reading prevention key.

Thus, unless the reading prevention key is released, it is impossible to read the ticket data, in which the reading prevention key has become effective. In this case, when the mobile communication terminal unit 3 of the user having obtained the ticket data transfers the ticket data to the third party mobile communication terminal unit, the third party mobile communication terminal unit can not read the ticket data itself because it is not holding a means for releasing the reading prevention key.

The user holding the ticket data thus can transmit, by using the mobile communication terminal unit 3, the ticket data via the short-distance radio to the entrance allowing unit 4 installed at the entrance gate of the match spot, thus causing the justice check process on the ticket data. Since the entrance allowing unit 4 has stored release code for releasing the reading prevention key, it never becomes impossible to execute a ticket data input process. In this embodiment, when the justice of the ticket data has been proved, updated ticket data obtained by adding new data to the justice-proved ticket data is transmitted from the entrance allowing unit 4 to the mobile communication terminal unit 3 to prevent re-entrance with the justice-proved ticket data. Again in this case, the reading prevention key becomes effective when the mobile communication terminal unit 3 receives the updated ticket data.

As will be apparent, according to the present system, the following effect can be obtained.

The mobile communication terminal unit, the enjoyment data reading system and the enjoyment data providing method embodying the present invention permit spectators wiling to utilize the enjoyment facility to readily obtain data services provided by the sponsor of the enjoyment facility.

Changes in construction will occur to those skilled in the art and various apparently different modifications and embodiments may be made without departing from the scope of the present invention. The matter set forth in the foregoing description and accompanying drawings is offered by way of illustration only. It is therefore intended that the foregoing description be regarded as illustrative rather than limiting.

In a particular modification, the system can be adapted for more-generalised access control, e.g. of a sensitive or safety nature, and the invention may therefore be extended accordingly.

## Claims

1. A mobile communication terminal unit for obtaining utilization data necessary for its utilization from an enjoyment data providing server managing the utilization data, comprising:
a utilization data transmitting means for transmitting the utilization data obtained from the enjoyment data providing server via short-distance radio to an entrance allowing unit for managing the utilization of the enjoyment facility;
a connection data receiving means for receiving connection data for the connection to a data providing site provided by the enjoyment data providing server from the entrance allowing unit with the utilization data transmitted via the short-distance radio from the utilization data transmitting means; and
a data site connecting means for connection to the data providing site provided by the enjoyment data providing server on the basis of the connection data received from the connection data receiving means.

2. The mobile communication terminal unit according to claim 1, which further comprises:
a route guide retrieving process obtaining means for obtaining, when the connection to the enjoyment data providing means has been made by the data site connecting means, a retrieval program for retrieving the route guide up to a predetermined position in the enjoyment facility from the data providing site on the basis of the utilization data obtained from the enjoyment data providing server;
wherein:
the movable communication terminal unit executes a retrieval program obtained by the route guide retrieving process obtaining means, and a route guide up to a predetermined position in the enjoyment facility is retrieved on the basis of the utilization data and displayed in a display of the mobile communication terminal unit.

3. The movable communication terminal unit according to one of claims 1 and 2, wherein the utilization data is obtained from the enjoyment data providing server by an obtaining request from an external communication terminal unit connected to the enjoyment data providing serer.

4. The movable communication terminal unit according to one of claims 1 and 2, which further comprises:
a requesting means for obtaining the utilization data from the enjoyment data providing server;
the requesting means serving to obtain the utilization data from the enjoyment data providing server.

5. An enjoyment data receiving system comprising an enj oyment data providing server for managing utilization data necessary for utilizing enjoyment facility, a movable communication terminal unit for obtaining the utilization data, and a communication terminal unit for executing a registration process for causing the mobile communication terminal unit to obtain the utilization data, and an entrance allowing unit for managing the utilization of the enjoyment facility, wherein:
the communication terminal unit includes:
a utilization data transmission requesting means for transmitting a transmission request for transmitting the utilization data to the mobile communication terminal unit to the enjoyment data providing server;
the enjoyment data providing server includes:
a utilization data transmitting means for transmitting the utilization data to the mobile communication terminal unit on the basis of a transmission request transmitted from the communication terminal unit; and
a data providing site connecting means for connecting the movable communication terminal unit to a data managing site managed by the enjoyment data providing server by accessing from the mobile communication terminal unit with the utilization data transmitted thereto from the utilization data transmitting means;
the mobile communication terminal unit includes:
a utilization data receiving means for receiving the utilization data transmitted from the enjoyment data providing server;
a utilization data transmitting means for transmitting the utilization data received from the utilization data receiving means via short-distance radio to the entrance allowing unit; and
a connection data obtaining means for obtaining, from the entrance allowing unit with the utilization data transmitted thereto from the utilization data transmitting means, connection data or connection to the data providing site managed by the enjoyment data providing server; and
the entrance allowing unit includes:
a utilization data checking means for checking the justice of the utilization data transmitted via short-distance radio from the movable communication terminal unit; and
a connection data providing means for providing, when the justice of the utilization data has been proved by the utilization data checking means, the connection data for connection to the data providing site managed by the enjoyment data providing server.

6. The enjoyment data receiving system according to claim 5, wherein:
the communication terminal unit includes:
a settling means for executing a fee payment process necessary when transmitting the utilization data to the mobile communication terminal unit; and
a payment completion reporting means for transmitting, to the enjoyment data providing server, a report that the fee payment process in the settling means has been completed; and
the utilization data transmitting means:
transmits the utilization data to the mobile communication terminal unit when the fee payment process completion report has been transmitted from the communication terminal unit.

7. The enjoyment data receiving system according to claim 5, wherein:
the utilization data checking means checks the justice of the utilization data by checking whether the utilization data managed by the entrance allowing unit and the utilization data transmitted via short-distance radio from the mobile communication terminal unit are identical and, when it has been determined that the two utilization data are identical, the justice of the utilization data is proved.

8. The enjoyment data receiving system according to claim 7, wherein:
the utilization data managed by the entrance allowing unit is the utilization data transmitted from the enjoyment data providing server.

9. The enjoyment data receiving system according to claim 5, wherein:
the mobile communication terminal unit further includes:
a route guide retrieving process obtaining means for obtaining, when connection to the enjoyment data providing site has been made on the basis of the connection data obtained from the connection data obtaining means, a retrieving program for retrieving the route guide up to a predetermined position in the enjoyment facility from the data providing site on the basis of the utilization data obtained from the enjoyment data providing server;
the retrieving program obtained by the route guide retrieving process obtaining means being executed in the mobile communication terminal unit, the route guide up to a predetermined position in the enjoyment facility being retrieved for, the retrieved route guide being displayed on a display of the mobile communication terminal unit.

10. An enjoyment data receiving system comprising an enjoyment data providing server for managing utilization data necessary for utilizing enjoyment facility, a mobile communication terminal unit for obtaining the utilization data, and an entrance allowing unit for managing the utilization of the enjoyment facility, wherein:
the mobile communication terminal unit includes:
a utilization data obtaining requesting means for transmitting an obtaining request for obtaining the utilization data to the enjoyment data providing server;
a utilization data transmitting means for transmitting the utilization data obtained from the enjoyment data providing server with the obtaining request transmitted thereto from the utilization data obtaining requesting means via short-distance radio to the entrance allowing unit; and
a connection data obtaining means for obtaining, from the entrance allowing unit with the utilization transmitted thereto from the utilization data transmitting means, connection data for connection to a data providing site managed by the enjoyment data providing server;
the enjoyment data providing server includes:
a utilization data transmitting means for transmitting the utilization data to the mobile communication terminal unit on the basis of a transmission request transmitted from the communication terminal unit; and
a data providing site connecting means for connecting the movable communication terminal unit to a data managing site managed by the enjoyment data providing server by accessing from the mobile communication terminal unit with the utilization data transmitted thereto from the utilization data transmitting means; and
the entrance allowing unit includes:
a utilization data checking means for checking the justice of the utilization data transmitted via short-distance radio from the movable communication terminal unit; and
a connection data providing means for providing, when the justice of the utilization data has been proved by the utilization data checking means, the connection data for connection to the data providing site managed by the enjoyment data providing server.

11. The enjoyment data receiving system according to claim 10, wherein:
the mobile communication terminal unit further includes:
a payment data reporting Means for transmitting, to the enjoyment data providing server, payment data for executing fee settlement necessary for the utilization data from the enjoyment data providing server; and
the utilization data transmitting means:
transmits the utilization data to the mobile communication terminal unit when the fee settlement has been completed on the basis of the payment data transmitted from the mobile communication terminal unit.

12. The enjoyment data receiving system according to claim 10, wherein:
the utilization data checking means checks the justice of the utilization data by checking whether the utilization data managed by the entrance allowing unit and the utilization data transmitted via short-distance radio from the mobile communication terminal unit are identical and, when it has been determined that the two utilization data are identical, the justice of the utilization data is proved.

13. The enjoyment data receiving system according to claim 12, wherein:
the utilization data managed by the entrance allowing unit is the utilization data transmitted from the enjoyment data providing server.

14. The enjoyment data receiving system according to claim 10, wherein:
the mobile communication terminal unit further includes:
a route guide retrieving process obtaining means for obtaining, when connection to the enjoyment data providing site has been made on the basis of the connection data obtained from the connection data obtaining means, a retrieving program for retrieving the route guide up to a predetermined position in the enjoyment facility from the data providing site on the basis of the utilization data obtained from the enjoyment data providing server;
the retrieving program obtained by the route guide retrieving process obtaining means being executed in the mobile communication terminal unit, the route guide up to a predetermined position in the enjoyment facility being retrieved for, the retrieved route guide being displayed on a display of the mobile communication terminal unit.

15. An enjoyment data providing method carried out with an enjoyment data providing server for managing utilization necessary for utilizing enjoyment facility, a mobile communication terminal unit for obtaining the utilization data, a communication terminal unit for executing a registering process to let the mobile communication terminal unit obtain the utilization data and an entrance allowing unit for managing the utilization of the enjoyment facility, wherein:
the communication terminal unit executes:
a utilization data transmission requesting process of transmitting, to the enjoyment data providing server, a transmitting request for transmitting the utilization data to the mobile communication terminal unit;
a utilization data transmitting process, in which the enjoyment data providing server having received the transmitting request in the utilization data transmitting requesting process transmits the utilization data to the mobile communication terminal unit on the basis of the received transmitting request; and
a short-distance radio transmitting process, in which the mobile communication terminal unit having received the utilization data in the utilization data transmitting process transmits the utilization data via short-distance radio to the entrance allowing unit; and
the entrance allowing unit executes:
a connection data providing process of checking the justice of the utilization data transmitted from the mobile communication terminal unit in the short-distance radio transmitting process and, when the justice of the utilization data has been proved, providing connection data for connection to a data providing site managed by the enj oyment data providing server to the mobile communication terminal unit; and
the mobile communication terminal unit executes:
a data providing site connecting process of effecting connection to the data providing site managed by the enjoyment data providing server by using connection data provided in the connection data providing process.

16. The enjoyment data providing method according to claim 15, wherein:
the communication terminal unit executes:
a fee payment process necessary when transmitting the utilization data to the mobile communication terminal unit and, when it completes the fee payment process, transmits to the enjoyment data providing server a report that the fee payment process has been completed; and
in the utilization data transmitting process:
when the report of the fee payment process completion has been made in the fee payment completion reporting process, the utilization data is transmitted to the mobile communication terminal unit.

17. The enjoyment data providing method according to claim 15, wherein:
the connection data providing process checks the justice of the utilization data by checking whether the utilization data managed by the entrance allowing unit and the utilization data transmitted via short-distance radio from the mobile communication terminal unit are identical and, when it has been determined that the two utilization data are identical, the justice of the utilization data is proved.

18. The enjoyment data providing method according to claim 17, wherein:
the utilization data managed by the entrance allowing unit is the utilization data transmitted from the enjoyment data providing server.

19. The enjoyment data providing method according to claim 15, wherein:
when the mobile communication terminal unit has been connected to the data providing site in the data site connecting process, a retrieving program for retrieving a route guide up to a predetermined position in the enj oyment facility is transmitted from the data providing site to the mobile communication terminal unit on the basis of the utilization data and executed in the mobile communication terminal unit, the route guide up to the predetermined position in the enjoyment facility is retrieved for on the basis of the utilization data, and the retrieved route guide is displayed on a display of the mobile communication terminal unit.

20. An enjoyment data providing method carried out with an enjoyment data providing server for managing utilization necessary for utilizing enjoyment facility, a mobile communication terminal unit for obtaining the utilization data, and an entrance allowing unit formanaging the utilization of the enjoyment facility, wherein:
the mobile communication terminal unit executes:
a utilization data obtaining requesting process of transmitting, to the enjoyment data providing server, a obtaining request for transmitting the utilization data to the mobile communication terminal unit;
a utilization data obtaining process, in which the enjoyment data providing server having received the obtaining request in the utilization data transmitting requesting process transmits the utilization data to the mobile communication terminal unit on the basis of the received obtaining request; and
a short-distance radio transmitting process, in which the mobile communication terminal unit having received the utilization data in the utilization data transmitting process transmits the utilization data via short-distance radio to the entrance allowing unit; and
the entrance allowing unit executes:
a connection data providing process of checking the justice of the utilization data transmitted from the mobile communication terminal unit in the short-distance radio transmitting process and, when the justice of the utilization data has been proved, providing connection data for connection to a data providing site managed by the enj oyment data providing server to the mobile communication terminal unit; and
the mobile communication terminal unit executes:
a data providing site connecting process of effecting connection to the data providing site managed by the enjoyment data providing server by using connection data provided in the connection data providing process.

21. The enjoyment data providing method according to claim 20, wherein:
the mobile communication terminal unit executes:
a fee payment data reporting process of transmitting, fee payment data for fee settling necessary when obtaining the utilization data from the enjoyment data providing server to the enjoyment data providing server; and
in the utilization data reporting process:
when the fee settling has been complete on the basis of the fee payment data transmitted in the payment data reporting process, the utilization data is transmitted to the mobile communication terminal unit.

22. The enjoyment data providing method according to claim 20, wherein:
the connection data providing process checks the justice of the utilization data by checking whether the utilization data managed by the entrance allowing unit and the utilization data transmitted via short-distance radio from the mobile communication terminal unit are identical and, when it has been determined that the two utilization data are identical, the justice of the utilization data is proved.

23. The enjoyment data providing method according to claim 22, wherein:
the utilization data managedby the entrance allowing unit is the utilization data transmitted from the enjoyment data providing server.

24. The enjoyment data providing method according to claim 20, wherein:
when the mobile communication terminal unit has been connected to the data providing site in the data site connecting process, a retrieving program for retrieving a route guide up to a predetermined position in the enj oyment facility is transmitted from the data providing site to the mobile communication terminal unit on the basis of the utilization data and executed in the mobile communication terminal unit, the route guide up to the predetermined position in the enjoyment facility is retrieved for on the basis of the utilization data, and the retrieved route guide is displayed on a display of the mobile communication terminal unit.
